# EUROPÄISCHE PATENTSCHRIFT

(11) **EP 3 569 426 B1**
(45) Veröffentlichungstag und Bekanntmachung des Hinweises auf die Patenterteilung: **10.03.2021**
(21) Anmeldenummer: 18173030.0
(22) Anmeldetag: 17.05.2018
(51) Int. Cl.: B60D 5/00, B61G 5/10

(54) **SYSTEM ZUR FÜHRUNG VON LEITUNGEN IN EINEM FAHRZEUG, INSBESONDERE IN EINEM FAHRZEUG MIT BEWEGLICH MITEINANDER VERBUNDENEN FAHRZEUGTEILEN**
SYSTEM FOR GUIDING LINES IN A VEHICLE, IN PARTICULAR IN A VEHICLE WITH MOVABLE VEHICLE PARTS CONNECTED WITH ONE ANOTHER
SYSTÈME DE GUIDAGE DES CONDUITES DANS UN VÉHICULE, EN PARTICULIER DANS UN VÉHICULE POURVU DE PARTIES DE VÉHICULE RACCORDÉES MOBILES LES UNES AUX

(43) Veröffentlichungstag der Anmeldung: 20.11.2019
(73) Patentinhaber: Hübner GmbH & Co. KG, 34123 Kassel (DE)
(72) Erfinder: Karasek, Jens, 34260 Kaufungen (DE); Dicke, Jan-Hendrik, 34225 Baunatal (DE); Schulz, Ralf, 34317 Habichtswald (DE); Schumann, Lilia, 34246 Vellmar (DE)

(56) Entgegenhaltungen:
- EP-A1- 2 233 327
- WO-A1-97/42045
- DE-A1-102010 011 903
- DE-A1-102016 214 159
- GB-A- 2 551 576
- US-A- 1 640 159

## Beschreibung

Die Erfindung betrifft ein System zur Führung von Leitungen in einem Fahrzeug, insbesondere in einem Fahrzeug mit beweglich miteinander verbundenen Fahrzeugteilen, mit den Merkmalen gemäß dem Oberbegriff von Anspruch 1. Weiterhin betrifft die Erfindung einen Übergang mit einem solchen System zur Führung von Leitungen sowie ein Fahrzeug mit einem solchen System zur Führung von Leitungen bzw. mit einem solchen Übergang.

### STAND DER TECHNIK

Beispielsweise offenbart die EP 3 210 803 A1 einen Übergang zwischen zwei gelenkig miteinander verbundenen Fahrzeugteilen, wobei im Dachbereich der Fahrzeugteile eine Führungseinrichtung für im Dachbereich verlaufende Versorgungsleitungen vorgesehen ist. Die Führungseinrichtung umfasst eine Federeinrichtung zur Führung der Versorgungsleitungen. Die Federeinrichtung kann sich beispielsweise in einer C-Form von einem zum nächsten Fahrzeugteil erstrecken. An der Federeinrichtung sind Leitungsträger angeordnet, durch die die Leitungen definiert und entlang der Federeinrichtung geführt werden. Bei den Leitungsträgern handelt es sich um seitlich von der Federeinrichtung abstehende Elemente in der Art eines Kragarmes. Die Leitungen liegen auf diesen Leitungsträgern auf oder, wenn eine größere Anzahl von Leitungen vorhanden ist, können auch mehrere Leitungen übereinander liegen.

Eine weitere Halteeinrichtung für Leitungen an einem Gelenkfahrzeug offenbart die DE 10 2010 011 903 B4. Bei dieser Ausführung werden die Leitungen mittels eines Befestigungsmittels klemmend erfasst und an einem flexiblen Halteband befestigt. Die Leitungen verlaufen in einer gemeinsamen Ebene mit dem Halteband und die Leitungen sind unterhalb des Haltebandes angeordnet.

Weiterhin offenbart die DE 10 2016 214 159 A1 einen Halter zur Führung von Leitungen in einem Schienenfahrzeug. Der Halter erfasst die Leitungen klemmend und weist zudem ein plattenförmiges Element auf, womit die Leitungen zumindest abschnittsweise gestützt werden. Der Halter wird nach oben durch ein Teil des Übergangs oder des Fahrzeugs abgestützt.

Aus dem Dokument GB 2 551 576 A ist ein System zur Führung von Leitungen im Bereich einer seitlichen Balgabdeckung bekannt. Dabei sind die Leitungen durch einen Halter aufgenommen, der entlang einer geraden Schiene verschieblich aufgehängt ist. Die Schiene ist dabei im Bereich der seitlichen Balgabdeckung angeordnet und quer zur Durchgangsrichtung orientiert.

Aus dem Dokument WO 97/42045 A1 sind verschiedene Varianten eines Systems zur Führung von Versorgungsleitungen im Übergang eines Gelenkfahrzeugs bekannt. Bei einer Variante des Systems sind zwei Schlitten vorgesehen, in denen die Versorgungsleitungen eingespannt sind und die entlang eines Mittelrahmens des Übergangs verschieblich angeordnet sind. Die Schlitten stehen über Führungsstangen mit den beiden Endrahmen des Übergangs und somit letztlich mit den Fahrzeugteilen in Verbindung. Entsprechend wird eine Bewegung der Schlitten in Abhängigkeit von der Bewegung der Fahrzeugteile relativ zueinander gesteuert. Gemäß einer zweiten Variante des aus WO 97/42045 A1 bekannten Systems ist an dem Mittelrahmen ein Schwenkarm vorgesehen, an dem endseitig Halterungen für die Versorgungsleitungen angeordnet sind. Damit der Schwenkarm den Relativbewegungen der Fahrzeugteile folgen kann, ist dieser drehbar am Mittelrahmen angeordnet.

Das Dokument US 1,640,159 A offenbart ein System zur Leitungsführung, bei dem eine Leitung zwischen zwei Schienenfahrzeugteilen auf einer Rolle abgestützt ist. wobei die Rolle um eine vertikale Achse drehbar auf einer mittig angeordneten Säule gelagert ist Das Dokument EP 2 233 327 A1 offenbart ein System gemäß dem Oberbegriff des Anspruchs 1.

Es hat sich herausgestellt, dass in Fahrzeugen mit beweglich miteinander verbundenen Fahrzeugteilen die Anforderung besteht, zunehmend eine größere Anzahl sowie schwerere Leitungen zwischen den Fahrzeugteilen zu führen. Insbesondere bei Fahrzeugen mit elektrischem Antrieb müssen massive Stromkabel zwischen den Fahrzeugteilen geführt werden. Herkömmliche Lösungen zur Führung von Leitungen können diesen Anforderungen nicht mehr genügen, da die vorhandene Kapazität zur Aufnahme und Führung der Leitungen ausgeschöpft ist. Ein weiteres Problem stellt der Verschleiß dar, der sich bei herkömmlichen Lösungen an den Leitungen einstellt. Ein übermäßiger Verschleiß der Leitungen kann zu deren Ausfall führen, sodass Leitungen mit viel Aufwand ersetzt werden müssen. Außerdem kann dies zu einem erhöhten Sicherheitsrisiko im Betrieb führen, z. B. wenn die Isolierung von Stromleitungen durch Verschleiß beschädigt wird.

### OFFENBARUNG DER ERFINDUNG

Aufgabe der Erfindung ist die Weiterbildung eines Systems zur Führung von Leitungen in einem Fahrzeug, das insbesondere auch für die Führung von einer großen Zahl an Leitungen geeignet ist, wobei gleichzeitig kein erhöhter Verschleiß in Kauf genommen werden muss oder der Verschleiß sogar reduziert ist. Ferner ist es Aufgabe der Erfindung, einen Übergang bzw. ein Fahrzeug mit solch einem verbesserten System aufzuzeigen.

Die erfindungsgemäße Aufgabe wird gelöst durch ein System zur Führung von Leitungen in einem Fahrzeug mit den Merkmalen des unabhängigen Anspruchs 1. Ferner wird die erfindungsgemäße Aufgabe gelöst durch einen Übergang mit den Merkmalen des unabhängigen Anspruchs 14 sowie durch ein Fahrzeug mit den Merkmalen des unabhängigen Anspruchs 16.

Der Erfindung liegt die Erkenntnis zugrunde, dass es bei Bewegungen zwischen zwei beweglich miteinander verbundenen Fahrzeugteilen zwangsläufig auch zu Bewegungen von Leitungen relativ zu einem für die Führung der Leitungen vorgesehenen Stabilisierungselement kommt, wobei die Bewegungen mit zunehmendem Abstand von dem Stabilisierungselement immer größer werden. Entsprechend kommt es bei den aus dem Stand der Technik bekannten Lösungen, wie der aus EP 3 210 803 A1 bekannten Lösung, zwangsläufig auch zu Verschleißerscheinungen insbesondere bei außenliegenden Leitungen, wenn sich die Leitungen relativ zu den Leitungsträgern und so auch relativ zu dem Stabilisierungselement bewegen und dabei aneinander oder an dem Leitungsträger reiben. Demgegenüber wird erfindungsgemäß vorgeschlagen, dass der erforderliche Bewegungsfreiheitsgrad nicht dadurch bereitgestellt wird, dass die Leitungen selbst frei beweglich sind, sondern in erster Linie dadurch, dass diese in einem Aufnahmeelement angeordnet sind, wobei das Aufnahmeelement beweglich an dem Stabilisierungselement angeordnet ist. Bei einer Bewegung der beiden Fahrzeugteile relativ zueinander können sich die Leitungen somit weiterhin relativ zu dem Stabilisierungselement bewegen, um so die erforderlichen Ausgleichsbewegungen durchzuführen. Allerdings wird diese Bewegung durch das beweglich an dem Stabilisierungselement angeordnete Aufnahmeelement ermöglicht. Entsprechend treten Verschleißerscheinungen in erster Linie im Bereich der beweglichen Anordnung des Aufnahmeelements an dem Stabilisierungselement auf, aber nicht an den Leitungen.

Das erfindungsgemäße System zur Führung von Leitungen kommt bei einem Fahrzeug mit beweglich miteinander verbundenen Fahrzeugteilen zum Einsatz, um dort die Leitungen von dem einen Fahrzeugteil zum anderen Fahrzeugteil zu führen.

Bei dem Fahrzeug kann es sich insbesondere um ein Straßenfahrzeug, z. B. einen Gelenkbus, handeln. Das erfindungsgemäße System kann aber auch bei einem Schienenfahrzeug wie einer Straßenbahn zum Einsatz kommen. Die Fahrzeugteile können dabei jeweils für sich oder nur in verbundenem Zustand fahrfähig sein.

Bei dem Stabilisierungselement handelt es sich vorteilhaft um ein Teil aus einem biegsamen dünnen Material mit einer Haupterstreckungsrichtung, in der Art einer Blattfeder. Beispielsweise kann das Stabilisierungselement aus einem metallischen Werkstoff gebildet sein. Das Stabilisierungselement weist eine derartige Flexibilität auf, dass es in einer gebogenen Form, zum Beispiel einer C-Form, von einem zum nächsten Fahrzeug verlaufen kann. Das Stabilisierungselement gibt einen definierten Verlauf der Leitungen vor und nimmt die Gewichtskraft der Leitungen zumindest teilweise auf, sodass eine übermäßiges Knicken sowie ein Durchhängen der Leitungen vermieden werden kann.

Damit eine Leitung dem Verlauf des Stabilisierungselements folgen kann sowie Gewichtskräfte übertragen werden können, ist zwischen Stabilisierungselement und der Leitung mindestens ein Aufnahmeelement vorhanden, in dem eine oder auch mehrere Leitungen aufgenommen werden können. Die Aufnahmeelemente können unmittelbar oder mittelbar an dem Stabilisierungselement angeordnet sein. Je nach Länge des Stabilisierungselements und/oder des Gewichts der Leitung(en) kann es vorteilhaft sein, wenn das erfindungsgemäße System mehrere Aufnahmeelemente aufweist, die insbesondere in der Haupterstreckungsrichtung des Stabilisierungselements verteilt hintereinander angeordnet sind, sodass ein Durchhängen der Leitungen zwischen den Fahrzeugteilen oder zwischen einzelnen Aufnahmeelementen vermieden wird. Auch in Richtung quer zu der Haupterstreckungsrichtung können mehrere Aufnahmeelemente vorhanden sein, sodass mehrere Leitungen oder Leitungspakte parallel zueinander geführt werden können.

Erfindungsgemäß ist das Aufnahmeelement beweglich an dem Stabilisierungselement angeordnet. Bei Bewegung der Fahrzeugteile zueinander stellt das Stabilisierungselement eine Art neutrale Faser dar, dessen Länge sich nicht ändert. Werden Leitungen seitlich des Stabilisierungselements geführt, ergibt sich bei Bewegung der Fahrzeugteile zueinander eine Relativbewegung zwischen Leitungen und Stabilisierungselement. Indem die Relativbewegung in erster Linie durch das Aufnahmeelement und nicht direkt durch die Leitung ausgeführt wird, kann die Gefahr eines frühzeitigen Verschleißes der Leitung reduziert werden, wobei dennoch die erforderlichen Ausgleichsbewegungen ausgeführt werden können. Insbesondere ist es von Vorteil, wenn das Aufnahmeelement derart an dem Stabilisierungselement angeordnet ist, dass sich der Abstand zwischen den Leitungen und dem Stabilisierungselement ändern kann, zum Beispiel durch eine Verschiebung in einer Richtung quer zur Haupterstreckungsrichtung des Stabilisierungselements und/oder ein Verschwenken des Aufnahmeelements relativ zu dem Stabilisierungselement.

Besonders vorteilhaft ist es, wenn das Aufnahmeelement in Haupterstreckungsrichtung des Stabilisierungselements sowie in beide Richtungen quer zu der Haupterstreckungsrichtung sowie schwenkbar an dem Stabilisierungselement angeordnet ist. Erfindungsgemäß sind jedoch auch solche Ausführungsformen umfasst, bei denen die Bewegung lediglich in eine oder zwei Richtungen möglich ist. Vorteilhaft handelt es sich um eine translatorische Verschiebbarkeit des Aufnahmeelements gegenüber dem Stabilisierungselement, womit das Aufnahmeelement und somit auch die darin aufgenommene Leitung die wesentlichen Ausgleichsbewegungen bei einer Bewegung der beiden Fahrzeugteile relativ zueinander ausführen können.

Alternativ oder zusätzlich kann das Aufnahmeelement schwenkbar an dem Stabilisierungselement angeordnet sein.

Gemäß einer Ausführungsform der Erfindung ist das Aufnahmeelement hängend an dem Stabilisierungselement angeordnet. Die hängende Anordnung kann sowohl mittelbar, zum Beispiel über eine Führungseinrichtung, als auch unmittelbar an dem Stabilisierungselement erfolgen. Eine hängende Anordnung zeichnet sich dadurch aus, dass das Aufnahmeelement in seinem oberen Bereich, insbesondere in dem Bereich über der Leitungsaufnahme, mit dem Stabilisierungselement in Verbindung steht. Weiterhin zeichnet sich eine hängende Anordnung dadurch aus, dass im Einbauzustand im Wesentlichen nur Vertikalkräfte in Richtung der Gewichtskraft übertragen werden. Durch die hängende Anordnung kann beispielsweise die Montage auf besonders einfache Weise realisiert werden, da das Aufnahmeelement lediglich an der Führungseinrichtung aufgehängt werden muss, ohne aufwendige Befestigungsmittel vorzusehen. Außerdem bietet die hängende Anordnung den Vorteil, dass die Bauteile aufgrund der mechanischen Anforderungen einfach gehalten werden können. Das Aufnahmeelement und insbesondere sein Kopplungsabschnitt müssen lediglich die vertikalen Gewichtskräfte aufnehmen. Außerdem wird sich das Aufnahmeelement bei einer hängenden Anordnung stets vertikal ausrichten. Bei einer entsprechenden Ausgestaltung des Kopplungsabschnitts kann mit der hängenden Anordnung erreicht werden, dass das Aufnahmeelement aufgrund der wirkenden Gewichtskraft stets die Position in einem definierten Nullpunkt anstrebt.

Wie bereits ausgeführt, kann das Aufnahmeelement mittelbar an dem Stabilisierungselement angeordnet sein. Dazu kann an dem Stabilisierungselement eine Führungseinrichtung angeordnet sein, durch die das Aufnahmeelement mittelbar an dem Stabilisierungselement beweglich angeordnet ist. Konkret kann die Führungseinrichtung eine sich quer zur Haupterstreckungsrichtung erstreckende Führungsstange aufweisen. Dadurch kann das Aufnahmeelement samt Leitungen beabstandet zu dem Stabilisierungselement angeordnet werden und/oder es können mehrere Aufnahmeelemente nebeneinander angeordnet werden. Durch die Erstreckung der Führungsstange in Richtung quer zur Haupterstreckungsrichtung kann in diesem Bereich eine Bewegung des Aufnahmeelements quer zur Haupterstreckungsrichtung ermöglicht werden. Durch die Führungseinrichtung kann eine Bewegung des Aufnahmeelements relativ zu dem Stabilisierungselement geführt werden. Um jedoch eine definierte Relativbewegung zwischen Stabilisierungselement und Aufnahmeelement zuzulassen und den Bewegungsspielraum nicht zu stark einzugrenzen, kann in der Führungseinrichtung und/oder in der Verbindung der Führungseinrichtung mit dem Aufnahmeelement und/oder in der Verbindung der Führungseinrichtung mit dem Stabilisierungselement ein definiertes Spiel vorhanden sein.

Die Führungsstange kann lediglich einseitig oder beidseitig des Stabilisierungselements angeordnet sein. Vorzugsweise erstreckt sich die Führungsstange jedoch beidseitig des Stabilisierungselements, sodass mit einer Führungseinrichtung auf beiden Seiten des Stabilisierungselements Aufnahmeelemente und Leitungen geführt werden können.

Vorteilhaft weist die Führungsstange an einem freien Ende ein Begrenzungselement auf, sodass das Aufnahmeelement nicht von der Führungsstange rutschen kann. Besonders vorteilhaft ist die Position des Begrenzungsmittels auf der Führungsstange flexibel einstellbar, sodass der Bewegungsspielraum des Aufnahmemittels auf der Führungsstange einstellbar ist.

Zwischen mehreren Aufnahmeelementen auf einer Führungsstange und/oder in Richtung des Begrenzungselements und/oder Stabilisierungselements können Federelemente wie eine Druckfeder, Gummipuffer o. ä. vorgesehen sein. Insbesondere kann das Aufnahmeelemente so in Richtung seiner Ausgangsstellung beaufschlagt werden. Außerdem kann durch ein zwischen zwei Aufnahmeelementen angeordnetes Federelement verhindert werden, dass sich die Aufnahmeelemente zu nahe kommen und ggf. verhaken können.

Vorteilhaft ist das Aufnahmeelement mittelbar oder unmittelbar an dem Stabilisierungselement aufgehängt. Dazu weist das Aufnahmeelement vorzugsweise einen Kopplungsabschnitt sowie eine Leitungsaufnahme auf. Der Kopplungsabschnitt dient der mittelbaren oder unmittelbaren Anordnung des Aufnahmeelements an dem Stabilisierungselement. Die Anordnung kann hängend, tragend oder in einer anderen Ausführung erfolgen. Insbesondere kann der Kopplungsabschnitt so ausgestaltet sein, dass das Aufnahmeelement damit an dem Stabilisierungselement bzw. einer daran angeordneten Führungseinrichtung aufgehängt werden kann. Insbesondere bei einer hängenden Anordnung kann sich der Kopplungsabschnitt im oberen Bereich, insbesondere im oberen Drittel, des Aufnahmeelements befinden.

Die Leitungsaufnahme und der Kopplungsabschnitt können einstückig miteinander verbunden sein oder es kann sich um separate Teile handeln, die miteinander verbunden sind. Zum Beispiel kann der Kopplungsabschnitt eine Rolle aufweisen, die beweglich an der Leitungsaufnahme angeordnet ist.

Gemäß einer besonders einfachen Ausführung des erfindungsgemäßen Systems weist der Kopplungsabschnitt eine Ausnehmung auf, die der Aufnahme an dem Stabilisierungselement oder der Führungseinrichtung dient. Dabei weist die Ausnehmung eine Haupterstreckungsrichtung auf, die im Wesentlichen parallel zur Haupterstreckungsrichtung des Stabilisierungselements orientiert ist, wodurch eine Verschiebbarkeit des Aufnahmeelements gegenüber der Haupterstreckungsrichtung des Stabilisierungselements realisiert werden kann. Im Bereich der Ausnehmung kann eine Beschichtung und/oder Materialstrukturierung vorgesehen sein, z. B. um Einfluss auf die Gleiteigenschaften zu nehmen, so dass das Aufnahmeelement wahlweise besonders leicht oder eher schwer beweglich ist.

In weiterer Ausgestaltung kann die Ausnehmung in ihrer Haupterstreckungsrichtung gewölbt und/oder in der Querschnittsform elliptisch ausgebildet sein. Die gewölbte oder elliptische Querschnittsform ist vorteilhaft in der Art, dass der Scheitel der Wölbung oder der elliptischen Querschnittsform eine Art Nullpunkt bildet, sodass sich das Aufnahmeelement aufgrund der wirkenden Gewichtskraft stets in diese Position bewegt, wenn das Aufnahmemittel aufgehängt ist.

Gemäß einer alternativen Ausführungsform weist der Kopplungsabschnitt eine drehbar gelagerte Rolle auf, die dazu ausgebildet ist, auf einem Teil der Führungseinrichtung entlang zu rollen und/oder zu gleiten und somit die Bewegung zwischen dem Aufnahmeelement und dem Stabilisierungselement zu ermöglichen. Es kann ausreichend sein, wenn die Rolle eine Bewegung des Aufnahmeelements in Richtung quer zu der Haupterstreckungsrichtung des Stabilisierungselements durch Abrollen der Rolle z. B. auf der Führungsstange ermöglicht. Um auch komplexere Ausgleichsbewegungen des Aufnahmeelements und damit der davon aufgenommenen Leitung relativ zu dem Stabilisierungselement zu ermöglichen, kann es jedoch vorteilhaft sein, wenn die Rolle zusätzlich eine Bewegung in einer Richtung in der Haupterstreckungsrichtung des Stabilisierungselements zulässt. Dazu kann die Rolle z. B. derart ausgebildet ist, dass die Führungsstange auch quer zur Abrollrichtung auf der Rolle bewegt werden kann. Beispielsweise kann die Rolle eine zentrale Führungsrille sowie seitlich dazu geneigte Flanken aufweisen. In Abhängigkeit der Neigung der seitlichen Flanken kann eine Verschiebung des Aufnahmeelements in Haupterstreckungsrichtung des Stabilisierungselements ermöglicht werden.

Gemäß einer Ausführungsform weist das Aufnahmeelement, insbesondere seine Leitungsaufnahme, mindestens eine Öffnung zum Aufnehmen mindestens einer Leitung auf. Vorteilhaft handelt es sich um eine Öffnung mit einem kreisrunden Querschnitt. Ein Aufnahmeelement kann auch mehrere Öffnungen, zum Beispiel zwei bis vier Öffnungen, aufweisen, wodurch durch ein und dasselbe Aufnahmeelement mehrere Leitungen aufgenommen werden können. Sofern das Aufnahmeelement mehrere Öffnungen aufweist, sind diese bevorzugt übereinander angeordnet und besonders vorteilhaft liegen die mehreren Öffnungen in einer gemeinsamen vertikalen Ebene (bezogen auf den Einbauzustand des Systems in das Fahrzeug).

Die Aufnahme der Leitung in der Öffnung erfolgt bevorzugt unbeweglich, sodass eine Relativbewegung zwischen Leitung und Aufnahmeelement vermieden und Verschleiß entsprechend verringert wird. In begrenztem Umfang kann die Aufnahme der Leitung jedoch auch beweglich sein, um beispielsweise eine Ausdehnung einer Leitung ausgleichen zu können. Besonders bevorzugt weisen alle Öffnungen den gleichen Querschnitt auf, sodass eine große Anzahl an Gleichteilen hergestellt werden kann. Mittels der Öffnungen werden die Leitungen direkt oder indirekt erfasst, d. h. das Aufnahmeelement kann in direktem Kontakt mit der Leitung stehen oder zwischen der Leitung und dem Aufnahmeelement kann mindestens ein weiteres Bauteil angeordnet sein. Konkret kann in mindestens einer Öffnung ein Distanzstück aufgenommen sein, das zur Anpassung des freien Querschnitts der Öffnung an einem Querschnitt der aufzunehmenden Leitung dient. So können beispielsweise in einem Aufnahmeelement, das mehrere Öffnungen mit gleichem Querschnitt aufweist, Leitungen mit unterschiedlichem Querschnitt sicher aufgenommen werden, indem bei Aufnahme einer vergleichsweisen dünnen Leitung ein zusätzliches Distanzstück zwischen Leitung und Aufnahmeelement angeordnet wird.

Gemäß einer weiteren Ausführungsform ist das Aufnahmeelement, insbesondere die Leitungsaufnahme, mehrteilig ausgeführt. Besonders bevorzugt ist das Aufnahmeelement, insbesondere die Leitungsaufnahme, zweiteilig ausgeführt und die Trennfläche wird durch eine mittig durch das Aufnahmeelement vertikal verlaufende Ebene gebildet. Besonders bevorzugt handelt es sich um eine symmetrische Teilung, wobei die beiden Teile jeweils eine Halbschale (oder bei der Aufnahme von mehreren Leitungen mehrere Halbschalen) zur Aufnahme der Leitung aufweisen.

Vorteilhaft weist das Aufnahmeelement zwei Klemmbacken auf, zwischen denen die Leitung klemmbar aufnehmbar ist. Die beiden Klemmbacken können kraftschlüssig, formschlüssig oder stoffschlüssig miteinander verbunden sein, zum Beispiel durch eine Schraubverbindung, durch eine Rastverbindung oder eine Klebverbindung. Die beiden Klemmbacken können auch gelenkig miteinander verbunden sein, zum Beispiel durch ein Filmscharnier. Die Klemmbacken können eine Kombination verschiedener Werkstoffe aufweisen, beispielsweise können die die Öffnungen begrenzenden Wandungen aus einem weicheren Material, zum Beispiel einem Kunststoff, und die Außenflächen durch ein härteres Material, zu, Beispiel ein Metall, gebildet sein. Durch die Verwendung eines härteren Materials an der Außenseite kann beispielsweise einem Verschleiß durch aneinander Reiben mehrerer Aufnahmeelemente entgegengewirkt werden, während durch das weichere Material insbesondere im Bereich der Öffnung(en) für die Leitung(en) eine sichere Aufnahme der Leitung(en) sichergestellt werden kann, ohne dass die Gefahr einer Beschädigung der Leitung(en) besteht.

Die Erfindung betrifft außerdem einen Übergang für zwei beweglich miteinander verbundene Fahrzeugteile, beispielsweise für ein Schienenfahrzeug oder einen Gelenkbus. Erfindungsgemäß weist der Übergang ein System zur Führung von Leitungen auf, wobei das System zur Führung von Leitungen mindestens ein Stabilisierungselement und ein Aufnahmeelement zum Aufnehmen einer Leitung aufweist, wobei das Aufnahmeelement beweglich an dem Stabilisierungselement angeordnet ist. Ein Übergang zwischen zwei beweglich miteinander verbundenen Fahrzeugteilen weist in der Regel ein die beiden Fahrzeugteile verbindendes Gelenk, eine Übergangsplattform und einen Übergangsbalg, beispielsweise einen Faltenbalg, auf. Ein Übergangsbalg kann, in Fahrtrichtung gesehen, mittig einen zusätzlichen umlaufenden Rahmen zur Stabilisierung des Übergangsbalgs aufweisen, genannt Mittelrahmen. Besonders vorteilhaft verläuft das erfindungsgemäße System zur Führung von Leitungen im Dachbereich des Übergangs, beispielsweise über einem Übergangsbalg des Übergangs oder in dem Zwischenraum zwischen Übergangsbalg und Zwischendecke des Übergangs. Gemäß einer bevorzugten Ausführungsform ist das System zur Führung von Leitungen mittelbar oder unmittelbar mit dem Übergang verbunden. Besonders vorteilhaft ist das System zur Führung von Leitungen mit dem Mittelrahmen des Übergangsbalgs verbunden. Zum Beispiel kann ein Führungselement des Systems zur Führung von Leitungen eine zusätzliche Verbindungseinrichtung aufweisen, die der Verbindung mit dem Übergang, insbesondere dem Mittelrahmen des Übergangsbalges dient. Beispielsweise kann die zusätzliche Verbindungseinrichtung mindestens eine Rolle aufweisen, die an dem Mittelrahmen direkt oder an einem mit dem Mittelrahmen verbundenen Bauteil abrollt, wie dies z. B. aus dem DE 10 2010 011 903 B4 bekannt ist. Bevorzugt ist das System zur Führung von Leitungen hängend an oder stehend auf dem Mittelrahmen angeordnet.

Die Erfindung richtet sich weiterhin auf ein Fahrzeug, insbesondere ein Fahrzeug mit beweglich miteinander verbundenen Fahrzeugteilen, wobei das Fahrzeug einen zuvor aufgeführten Übergang und/ oder ein zuvor aufgeführtes erfindungsgemäßes System zur Führung von Leitungen aufweist.

Hinsichtlich weiterer bevorzugter Ausführungsformen des erfindungsgemäßen Übergangs und des erfindungsgemäßen Fahrzeugs gelten die Ausführungen zu dem erfindungsgemäßen System zur Führung von Leitungen in einem Fahrzeug entsprechend.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine perspektivische Ansicht eines Übergangs eines Fahrzeugs mit beweglich miteinander verbundenen Fahrzeugteilen, wobei im Dachbereich des Übergangs ein System zur Führung von Leitungen angeordnet ist,
- Figur 2: eine perspektivische Ansicht eines erfindungsgemäßen Systems zur Führung von Leitungen zwischen zwei beweglich miteinander verbundenen Fahrzeugteilen,
- Figur 3: eine perspektivische Ansicht des Systems zur Führung von Leitungen gemäß Figur 2, wobei insbesondere die Leitungen und einige Aufnahmeelemente nicht dargestellt sind,
- Figur 4: eine perspektivische Ansicht einer Ausführungsform eines Aufnahmeelements,
- Figur 5: eine perspektivische Ansicht einer weiteren Ausführungsform eines Aufnahmeelements.

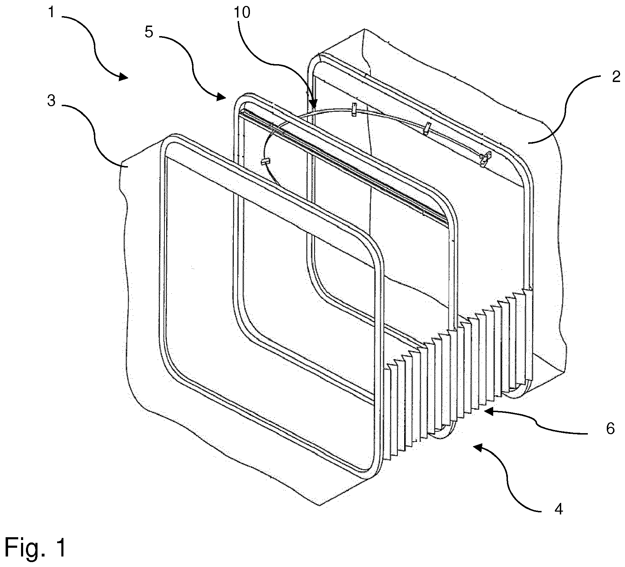

Figur 1 zeigt einen Übergang 4 zwischen zwei Fahrzeugteilen 2, 3 eines Fahrzeuges 1, wobei der Übergang 4 die beiden Fahrzeugteile 2, 3 so miteinander verbindet, dass die Fahrgasträume der Fahrzeugteile 2, 3 im Wesentlichen durchgehend miteinander in Verbindung stehen. Der Übergang 4 verbindet die beiden Fahrzeugteile 2, 3 dabei beweglich miteinander, sodass sich die Fahrzeugteile 2, 3 relativ zueinander bewegen können. Der Übergang 4 weist im Wesentlichen einen begehbaren Bodenbereich (nicht dargestellt), ein die beiden Fahrzeugteile 2, 3 verbindendes Gelenk (nicht dargestellt), einen Balg 6 und einen Mittelrahmen 5 auf. Figur 1 zeigt zudem das erfindungsgemäße System 10 zur Führung von Leitungen 11 im Dachbereich des Übergangs 4, wobei die Darstellung in Figur 1 lediglich schematisch erfolgt und nicht alle Bestandteile des Systems gezeigt sind.

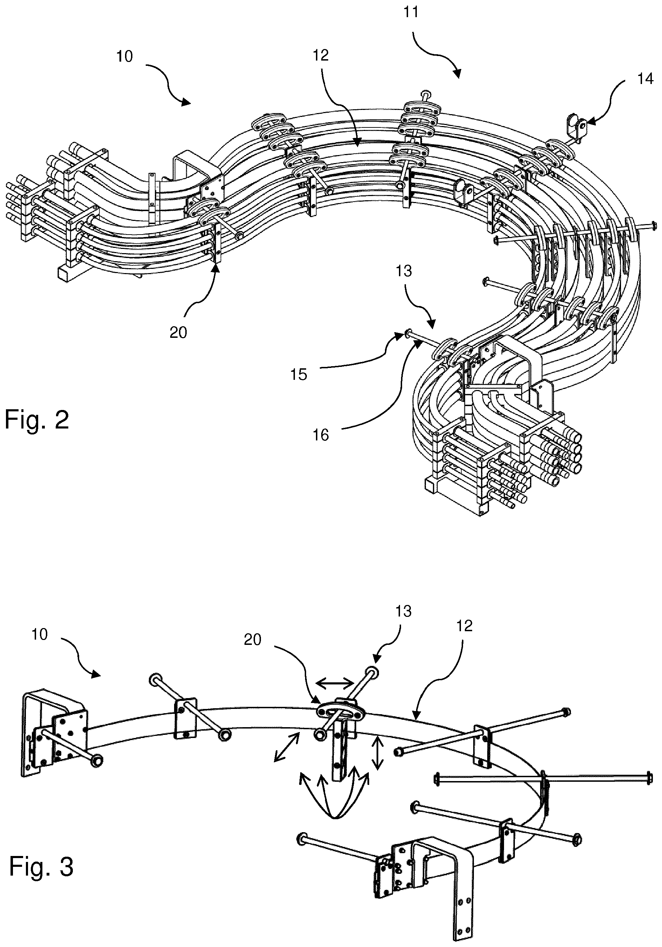

Figur 2 zeigt eine Ausführungsform des erfindungsgemäßen Systems 10 zur Führung von Leitungen 11. Das System 10 weist ein Stabilisierungselement 12, mehrere Führungseinrichtungen 13 mit Begrenzungsmitteln 15 sowie eine Verbindungseinrichtung 14 auf. Die Verbindungseinrichtung 14 dient dabei der hängenden Anordnung des Systems 10 an einem Übergang 4, insbesondere an einem Mittelrahmen 5 eines Übergangs 4.

Das Stabilisierungselement 12 bildet eine neutrale Faser des Systems 10 und dient der Aufnahme von Lasten der Leitungen 11 sowie der definierten Führung der Leitungen 11 zwischen den Fahrzeugteilen 2, 3. Bei dem Stabilisierungselement 12 handelt es sich typischerweise um ein Metallblech in der Art einer Blattfeder oder um ein Faserverbundmaterial, beispielsweise auf der Basis von Glasfaser oder Kohlefaser.

Bei dem in Figur 2 gezeigten Ausführungsbeispiel sind auf beiden Seiten des Stabilisierungselements 12 mehrere Leitungen 11 neben- und übereinander geführt. Dabei ist in Fig. 2 eine hängende Anordnung der Leitungen 11 gezeigt, wobei die Leitungen 11 durch Aufnahmeelemente 20 und Führungseinrichtungen 13 an dem Stabilisierungselement 12 gehalten sind. Dazu ist bei dem in Figur 2 gezeigten Ausführungsbeispiel ein Aufnahmeelement 20 jeweils an einer Führungsstange 16 einer Führungseinrichtung 13 aufgehängt. Zwischen dem Aufnahmeelement 20 und dem endseitig an der Führungsstange 16 angeordneten Begrenzungsmittel 15 ist ein Freiraum auf der Führungsstange 16 erkennbar. Dieser dient der beweglichen Anordnung des Aufnahmeelements 20 gegenüber dem Stabilisierungselement 12. D. h. das Aufnahmeelement 20 kann sich entlang der Führungsstange 16 bewegen. Außerdem ergeben sich, je nach Fahrsituation, Freiräume zwischen den Aufnahmeelementen 20 und dem Stabilisierungselement 12, sodass Bewegungen der Aufnahmeelemente 20 relativ zueinander und/oder relativ zu dem Stabilisierungselement 12 ermöglicht werden.

In Figur 2 ist das System 10 in einer bestimmten Fahrsituation, zum Beispiel dem Normalstand der beiden Fahrzeugteile zueinander, dargestellt. Durchfährt das Fahrzeug beispielsweise eine Kurve, so verschieben sich die Aufnahmeelemente 20 auf der Führungsstange 16, sodass sie z. B. in Anlage mit dem Begrenzungsmittel 15 kommen. Durch das Begrenzungsmittel 15 wird somit effektiv verhindert, dass die Aufnahmeelemente 20 von der Führungsstange 16 herunterrutschen können. Es kann damit aber auch der Bewegungsspielraum gezielt begrenzt werden.

Auch in Bezug auf die Position der Aufnahmemittel 20 in Haupterstreckungsrichtung des Stabilisierungselements 12 ergibt sich eine Beweglichkeit. Figur 2 zeigt die Aufnahmemittel 20 in einer Art Nullpunkt, d. h. die Aufnahmemittel 20 befinden sich in der Position, in der die Führungsstange 16 die Ausnehmung 24 in etwa mittig durchgreift und an deren höchster Stelle berührt. In einer anderen Fahrsituation können sich die Aufnahmeelemente 20 derart quer zu der Führungsstange 16 bzw. in Haupterstreckungsrichtung des Stabilisierungselements 12 bewegen, dass die Führungsstange 16 die Aufnahmeelemente 20 außermittig durchgreift.

Alle Aufnahmeelemente 20 können unabhängig voneinander andere Positionen in Bezug auf das Stabilisierungselement 12 einnehmen, d. h. es kann z. B. Aufnahmeelemente 20 geben, die komplett nach innen verschoben sind, während andere Aufnahmeelemente 20 komplett nach außen verschoben sind.

Figur 3 zeigt ein System gemäß Figur 2, wobei insbesondere die Leitungen 11 nicht dargestellt sind und auch nur ein Aufnahmeelement 20 dargestellt ist. Beispielhaft weist das System 10 sieben Führungseinrichtungen 13 auf. Dargestellt sind zwei mögliche Ausführungsformen der Führungseinrichtung 13. In beiden Fällen weist die Führungseinrichtung 13 eine Führungsstange 16 auf, die, bezogen auf die Haupterstreckungsrichtung des Stabilisierungselements 12, in Querrichtung von dem Stabilisierungselements abragt. Die erste dargestellte Ausführungsform der Führungseinrichtung 13 weist eine Führungsstange 16 auf, die zu beiden Seiten hin von dem Stabilisierungselement 12 abragt. Die zweite Ausführungsform der Führungseinrichtung 13 weist eine Führungsstange 16 auf, die in nur einer Richtung von dem Stabilisierungselement 12 abragt.

Die in Figur 3 gezeigten Richtungspfeile beziehen sich auf mögliche Bewegungen des einen exemplarisch dargestellten Aufnahmeelements 20 gegenüber dem Stabilisierungselement 12. Im Wesentlichen kann das Aufnahmeelement 20 in Bezug auf die Haupterstreckungsrichtung des Stabilisierungselements 12 Bewegungen in Längsrichtung und/oder in Querrichtung und/oder in Vertikalrichtung und/oder eine Schwenkbewegung ausführen. Dabei kann die Bewegungsfreiheit auf eine einzelne Bewegungsrichtung oder auf mehrere Bewegungsrichtungen beschränkt werden. Das Stabilisierungselement 20 kann die unterschiedlichen Bewegungen auch in Kombination ausführen.

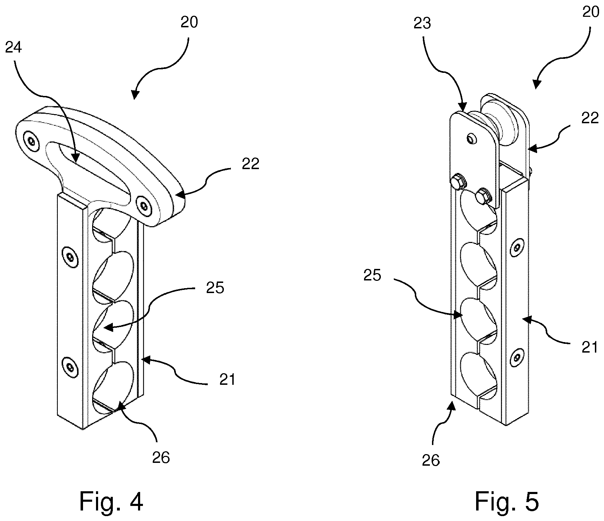

Figur 4 zeigt eine mögliche Ausführungsform eines Aufnahmeelements 20. Das beispielhaft gezeigte Aufnahmeelement 20 weist zwei Bereiche auf, nämlich eine Leitungsaufnahme 21 und einen Kopplungsabschnitt 22. Bei der dargestellten Ausführungsform des Aufnahmeelements 20 handelt es sich um eine Ausführung, welche besonders für die hängende Anordnung ausgelegt ist. Der Kopplungsabschnitt 22 ist entsprechend im oberen Bereich des Aufnahmeelements 20 angeordnet. Der Kopplungsabschnitt weist eine Ausnehmung 24 auf, die im gezeigten Ausführungsbeispiel einen länglichen bzw. elliptischen Querschnitt aufweist. Die Ausnehmung 24 weist eine Haupterstreckungsrichtung auf, die gleich ist mit der Haupterstreckungsrichtung des Stabilisierungselements 12, und die Ausnehmung 24 ist in seiner Haupterstreckungsrichtung gewölbt ausgebildet. Die Wölbung dient dazu, einen Art Nullpunkt zu realisieren, dessen Position das Aufnahmeelement aufgrund der wirkenden Gewichtskraft anstrebt.

Die Leitungsaufnahme 21 weist mehrere Öffnungen 25 auf, die der Aufnahme von Leitungen dienen. Beispielhaft weist das Aufnahmeelements 20 gemäß Figur 4 vier Öffnungen 25 auf, die gleiche Querschnitte aufweisen sowie übereinander und in einer gemeinsamen Ebene angeordnet sind. Somit können von dem einen Aufnahmeelement 20 bis zu vier Leitungen aufgenommen werden. Durch die Anordnung in einer Ebene wird dabei erreicht, dass diese jeweils im Wesentlichen im gleichen Abstand zu dem Stabilisierungselement 12 angeordnet sind, sodass im Wesentlichen die gleichen Kräfte auf die Leitungen wirken, wenn sich die Fahrzeugteile relativ zueinander bewegen und diese durch die Ausgleichsbewegung des Aufnahmeelements 20 gemeinsam ausgeglichen werden können.

Wenn Leitungen mit unterschiedlichen Leitungsquerschnitten von dem Aufnahmeelement 20 aufgenommen werden soll, kann in die Öffnungen 25 ein in Figur 4 nicht dargestelltes Distanzstück eingelegt werden, wodurch der freie Querschnitt an den jeweiligen Leitungsquerschnitt angepasst und die jeweilige Leitung somit sicher aufgenommen werden kann.

Das Aufnahmeelement 20 gemäß Figur 4 ist zweiteilig ausgeführt und weist zwei Klemmbacken 26 auf, zwischen denen die Leitungen 11 geklemmt werden. Die beiden Hälften bzw. die beiden Klemmbacken 26 des Aufnahmeelements 20 werden beispielsweise durch eine Schraubverbindung miteinander verbunden. In Figur 4 ist angedeutet, dass das Aufnahmeelement 20 aus zwei verschiedenen Materialien besteht, nämlich aus einem weicheren Material, welches die Wandungen der Öffnungen 25 bildet, und einem härteren Material, welches die Außenseite des Aufnahmeelements 20 bildet.

Figur 5 zeigt eine weitere Ausführungsform eines Aufnahmeelements 20, wobei sich diese Ausführungsform von der der Figur 4 lediglich in der Ausgestaltung des Kopplungsabschnitts 25 unterscheidet. Der Kopplungsabschnitt 22 wird hier im Wesentlichen durch eine Rolle 23 gebildet, die drehbar an der Leitungsaufnahme 21 befestigt ist. Die Rolle 23 ermöglicht eine Bewegung des Aufnahmeelements in einer Richtung quer zur Haupterstreckungsrichtung des Stabilisierungselements 12 durch Abrollen der Rolle 23 auf der Führungsstange 16. In einer weiteren Ausführungsform ermöglicht die Rolle 23 auch eine Bewegung in einer Richtung längs zur Haupterstreckungsrichtung des Stabilisierungselements 12, indem die Rolle 23 derart ausgestaltet ist, dass sie ein Verschieben der Rolle 23 in entsprechender Richtung ermöglicht. Gemäß einer weiteren Ausführungsform ermöglicht die Rolle 23 eine schwenkende Bewegung des Aufnahmeelements 20 und/oder eine vertikale Bewegung des Aufnahmeelements 20 gegenüber dem Stabilisierungselement 12. Beispielsweise kann die Rolle 23 auf seiner Lauffläche eine Führungsrille aufweisen, die im Wesentlichen der Bewegung und Führung des Aufnahmeelements 20 in einer Richtung quer zur Haupterstreckungsrichtung des Stabilisierungselements 12 dient. Die Rolle 23 kann auf seiner Lauffläche seitliche Flanken aufweisen, die eine Neigung aufweisen und ein seitliches Verschieben der Führungsstange 16 auf der Rolle 23 und/oder ein Verschwenken des Aufnahmeelements 20 gegenüber dem Stabilisierungselement 12 ermöglicht.

### Bezugszeichenliste:

- 1: Fahrzeug
- 2: Fahrzeugteil
- 3: Fahrzeugteil
- 4: Übergang
- 5: Mittelrahmen
- 6: Balg
- 10: System
- 11: Leitung
- 12: Stabilisierungselement
- 13: Führungseinrichtung
- 14: Verbindungseinrichtung
- 15: Begrenzungsmittel
- 16: Führungsstange
- 20: Aufnahmeelement
- 21: Leitungsaufnahme
- 22: Kopplungsabschnitt
- 23: Rolle
- 24: Ausnehmung
- 25: Öffnung
- 26: Klemmbacke

## Patentansprüche

1. System zur Führung von Leitungen (10) in einem Fahrzeug mit beweglich miteinander verbundenen Fahrzeugteilen (2,3), wobei das System zur Führung von Leitungen (10) ein Stabilisierungselement (12) und ein Aufnahmeelement (20) zum Aufnehmen einer Leitung (11) aufweist und wobei das Stabilisierungselement (12) eine solche Flexibilität aufweist, dass es in einer gebogenen Form von einem zum nächsten Fahrzeug verlaufen kann,
**dadurch gekennzeichnet, dass**
das Aufnahmeelement (20) in Bezug auf eine oder beide Richtungen quer zur Haupterstreckungsrichtung des Stabilisierungselements (12) beweglich an dem Stabilisierungselement (12) angeordnet ist.

2. System zur Führung von Leitungen (10) in einem Fahrzeug (1) nach Anspruch 1,
**dadurch gekennzeichnet, dass**
das Aufnahmeelement (20) in Bezug auf die Haupterstreckungsrichtung des Stabilisierungselements (12) und/oder eine oder beide Richtungen quer zu der Haupterstreckungsrichtung beweglich an dem Stabilisierungselement (12) angeordnet ist.

3. System zur Führung von Leitungen (10) in einem Fahrzeug (1) nach Anspruch 1 oder 2,
**dadurch gekennzeichnet, dass**
das Aufnahmeelement (20) schwenkbar an dem Stabilisierungselement (12) angeordnet ist.

4. System zur Führung von Leitungen (10) in einem Fahrzeug 1 nach einem der Ansprüche 1 bis 3,
**dadurch gekennzeichnet, dass**
das Aufnahmeelement (20) hängend mittelbar oder unmittelbar an dem Stabilisierungselement (12) angeordnet ist.

5. System zur Führung von Leitungen (10) in einem Fahrzeug (1) nach einem der vorhergehenden Ansprüche,
**dadurch gekennzeichnet, dass**
an dem Stabilisierungselement (12) eine Führungseinrichtung (13) angeordnet ist, durch die das Aufnahmeelement (20) mittelbar an dem Stabilisierungselement (12) beweglich angeordnet ist.

6. System zur Führung von Leitungen (10) in einem Fahrzeug (1) nach Anspruch 5,
**dadurch gekennzeichnet, dass**
die Führungseinrichtung (13) eine sich quer zur Haupterstreckungsrichtung des Stabilisierungselements (12) erstreckende Führungsstange (16) ist, wobei optional an einem freien Ende der Führungsstange (16) ein Begrenzungselement (15) zum Begrenzen einer Bewegung des Aufnahmeelements (20) längs der Führungsstange (16) angeordnet ist.

7. System zur Führung von Leitungen (10) in einem Fahrzeug (1) nach einem der vorhergehenden Ansprüche,
**dadurch gekennzeichnet, dass**
das Aufnahmeelement (20) eine Leitungsaufnahme (21) und einen Kopplungsabschnitt (22), mit dem das Aufnahmeelement (20) mittelbar oder unmittelbar an dem Stabilisierungselement (12) angeordnet ist, aufweist.

8. System zur Führung von Leitungen (10) in einem Fahrzeug (1) nach Anspruch 7,
**dadurch gekennzeichnet, dass**
der Kopplungsabschnitt (22) eine Ausnehmung (24) aufweist, deren Haupterstreckungsrichtung im montierten Zustand im Wesentlichen parallel zur Haupterstreckungsrichtung des Stabilisierungselements (12) orientiert ist.

9. System zur Führung von Leitungen (10) in einem Fahrzeug (1) nach Anspruch 8,
**dadurch gekennzeichnet, dass**
die Ausnehmung (24) in ihrer Haupterstreckungsrichtung gewölbt ausgebildet ist.

10. System zur Führung von Leitungen (10) in einem Fahrzeug (1) nach Anspruch 7,
**dadurch gekennzeichnet, dass**
der Kopplungsabschnitt (22) eine an der Leitungsaufnahme (21) drehbar gelagerte Rolle (23) aufweist.

11. System zur Führung von Leitungen (10) in einem Fahrzeug (1) nach einem der vorhergehenden Ansprüche,
**dadurch gekennzeichnet, dass**
das Aufnahmeelement (20), insbesondere seine Leitungsaufnahme (21), eine Öffnung (25) zum Aufnehmen mindestens einer Leitung (11) aufweist.

12. System zur Führung von Leitungen (10) in einem Fahrzeug (1) nach Anspruch 11,
**dadurch gekennzeichnet, dass**
in die Öffnung (25) ein Distanzstück aufnehmbar ist zur Anpassung eines freien Querschnitts der Öffnung (25) an einen Querschnitt der aufzunehmenden Leitung (11).

13. System zur Führung von Leitungen (10) in einem Fahrzeug (1) nach einem der vorhergehenden Ansprüche,
**dadurch gekennzeichnet, dass**
das Aufnahmeelement (20) zwei Klemmbacken (26) aufweist, zwischen denen die aufzunehmende Leitung (11) klemmbar aufnehmbar ist.

14. Übergang (4) zur Verbindung zweier beweglich miteinander verbundener Fahrzeugteile (2, 3)
**dadurch gekennzeichnet, dass**
der Übergang (4) ein System zur Führung von Leitungen (10) gemäß einem der Ansprüche 1 bis 13 aufweist.

15. Übergang (4) zur Verbindung zweier beweglich miteinander verbundener Fahrzeuge oder Fahrzeugteile (2, 3) nach Anspruch 14,
**dadurch gekennzeichnet, dass**
das System zur Führung von Leitungen (10) an dem Übergang, insbesondere an einem Mittelrahmen (5) des Übergangs (4), mittels einer Verbindungsvorrichtung (14) verbunden ist.

16. Fahrzeug (1), insbesondere Fahrzeug mit beweglich miteinander verbundenen Fahrzeugteilen (2, 3)
**dadurch gekennzeichnet, dass**
das Fahrzeug (1) einen Übergang (4) nach Anspruch 14 oder 15 oder ein System zur Führung von Leitungen (10) nach einem der Ansprüche 1 bis 13 aufweist.

## Claims

1. A system for guiding cables (10) in a vehicle with vehicle parts (2, 3) movably connected to one another, wherein the system for guiding cables (10) has a stabilization element (12) and a receiving element (20) for receiving a cable (11) and wherein the stabilization element (12) has such flexibility that it can extend from one vehicle to the next in a bent form
**characterized in that**
the receiving element (20) is movably arranged at the stabilization element (12) with respect to one or both directions transversely to the main direction of extension of the stabilization element (12).

2. The system for guiding cables (10) in a vehicle (1) according to claim 1,
**characterized in that**
the receiving element (20) is movably arranged at the stabilization element (12) with respect to the main direction of extension of the stabilization element (12) and/or with respect to one or both directions transversely to the main direction of extension of the stabilization element (12).

3. The system for guiding cables (10) in a vehicle (1) according to claim 1 or 2,
**characterized in that**
the receiving element (20) is pivotably arranged at the stabilization element (12).

4. The system for guiding cables (10) in a vehicle (1) according to any of claims 1 to 3,
**characterized in that**
the receiving element (20) is arranged in a suspended manner directly or indirectly at the stabilization element (12) .

5. The system for guiding cables (10) in a vehicle (1) according to any of the preceding claims,
**characterized in that**
a guide device (13) is arranged at the stabilization element (12), by means of which the receiving element (20) is movably arranged indirectly at the stabilization element (12).

6. The system for guiding cables (10) in a vehicle (1) according to claim 5,
**characterized in that**
the guide device (13) is a guide bar (16) extending transversely to the main direction of extension of the stabilization element (12), wherein a limiting element (15) for limiting a movement of the receiving element (20) along the guide bar (16) is optionally arranged on a free end of the guide bar (16).

7. The system for guiding cables (10) in a vehicle (1) according to any of the preceding claims,
**characterized in that**
the receiving element (20) has a cable receptacle (21) and a coupling section (22), with which the receiving element (20) is arranged indirectly or directly at the stabilization element (12).

8. The system for guiding cables (10) in a vehicle (1) according to claim 7,
**characterized in that**
the coupling section (22) has a recess (24), whose main direction of extension in the mounted state is oriented substantially parallel to the main direction of extension of the stabilization element (12).

9. The system for guiding cables (10) in a vehicle (1) according to claim 8,
**characterized in that**
the recess (24) is formed curved in its main direction of extension.

10. The system for guiding cables (10) in a vehicle (1) according to claim 7,
**characterized in that**
the coupling section (22) has a roller (23) rotatably supported at the cable receptacle (21).

11. The system for guiding cables (10) in a vehicle (1) according to any of the preceding claims,
**characterized in that**
the receiving element (20), in particular its cable receptacle (21), has an opening (25) for receiving at least one cable (11).

12. The system for guiding cables (10) in a vehicle (1) according to claim 11,
**characterized in that**
a spacer for adapting a free cross-section of the opening (25) to a cross-section of the cable (11) to be received can be received in the opening (25).

13. The system for guiding cables (10) in a vehicle (1) according to any of the preceding claims,
**characterized in that**
the receiving element (20) has two clamping jaws (26), between which the cable (11) to be received can be clamped.

14. A passage (4) for the connection of two vehicle parts (2, 3) movably connected to each other,
**characterized in that**
the passage (4) has a system for guiding cables (10) according to any of claims 1 to 13.

15. The passage (4) for the connection of two vehicles or vehicle parts (2, 3) movably connected to each other according to claim 14,
**characterized in that**
the system for guiding cables (10) is connected at the passage, in particular at a center frame (5) of the passage (4), by means of a connection device (14).

16. A vehicle (1), in particular a vehicle with vehicle parts (2, 3) movably connected to one another,
**characterized in that**
the vehicle (1) has a passage (4) according to claim 14 or 15 or a system for guiding cables (10) according to any of claims 1 to 13.

## Revendications

1. Système pour le guidage de conduites (10) dans un véhicule avec des parties de véhicule (2, 3) reliées les unes aux autres de façon mobile, dans lequel le système pour le guidage de conduites (10) comprend un élément de stabilisation (12) et un élément de réception (20) pour recevoir d'une conduite (11) et dans lequel l'élément de stabilisation (12) présente une flexibilité telle qu'il peut s'étendre selon une forme courbée d'un véhicule au véhicule suivant,
**caractérisé en ce que**
l'élément de réception (20) est disposé sur l'élément de stabilisation (12) de façon mobile par rapport à une ou aux deux directions transversalement à la direction d'étendue principale de l'élément de stabilisation (12).

2. Système pour le guidage de conduites (10) dans un véhicule (1) selon la revendication 1,
**caractérisé en ce que**
l'élément de réception (20) est disposé sur l'élément de stabilisation (12) de façon mobile par rapport à la direction d'étendue principale de l'élément de stabilisation (12) et/ou à une ou aux deux directions transversalement à la direction d'étendue principale.

3. Système pour le guidage de conduites (10) dans un véhicule (1) selon la revendication 1 ou 2,
**caractérisé en ce que**
l'élément de réception (20) est disposé de manière pivotante sur l'élément de stabilisation (12).

4. Système pour le guidage de conduites (10) dans un véhicule (1) selon l'une quelconque des revendications 1 à 3,
**caractérisé en ce que**
l'élément de réception (20) est disposé sur l'élément de stabilisation (12) en suspension de manière indirecte ou directe.

5. Système pour le guidage de conduites (10) dans un véhicule (1) selon l'une quelconque des revendications précédentes,
**caractérisé en ce que**
un dispositif de guidage (13), par lequel l'élément de réception (20) est disposé de façon mobile sur l'élément de stabilisation (12) de manière indirecte, est disposé sur l'élément de stabilisation (12).

6. Système pour le guidage de conduites (10) dans un véhicule (1) selon la revendication 5,
**caractérisé en ce que**
le dispositif de guidage (13) est une barre de guidage (16) s'étendant transversalement à la direction d'étendue principale de l'élément de stabilisation (12), dans lequel, éventuellement, un élément de limitation (15) destiné à limiter un mouvement de l'élément de réception (20) le long de la barre de guidage (16) est disposé sur une extrémité libre de la barre de guidage (16).

7. Système pour le guidage de conduites (10) dans un véhicule (1) selon l'une quelconque des revendications précédentes,
**caractérisé en ce que**
l'élément de réception (20) présente un réceptacle de conduite (21) et une partie d'accouplement (22), avec laquelle l'élément de réception (20) est disposé sur l'élément de stabilisation (12) de manière indirecte ou directe.

8. Système pour le guidage de conduites (10) dans un véhicule (1) selon la revendication 7,
**caractérisé en ce que**
la partie d'accouplement (22) présente un évidement (24) dont la direction d'étendue principale, dans l'état monté, est orientée sensiblement parallèlement à la direction d'étendue principale de l'élément de stabilisation (12).

9. Système pour le guidage de conduites (10) dans un véhicule (1) selon la revendication 8,
**caractérisé en ce que**
l'évidement (24) est réalisé de manière bombée dans sa direction d'étendue principale.

10. Système pour le guidage de conduites (10) dans un véhicule (1) selon la revendication 7,
**caractérisé en ce que**
la partie d'accouplement (22) présente un rouleau (23) monté en rotation sur le réceptacle de conduite (21).

11. Système pour le guidage de conduites (10) dans un véhicule (1) selon l'une quelconque des revendications précédentes,
**caractérisé en ce que**
l'élément de réception (20), en particulier son réceptacle de conduite (21), présente une ouverture (25) destinée à loger au moins une conduite (11).

12. Système pour le guidage de conduites (10) dans un véhicule (1) selon la revendication 11,
**caractérisé en ce que**
une entretoise peut être logée dans l'ouverture (25) pour l'adaptation d'une section transversale libre de l'ouverture (25) à une section transversale de la conduite (11) à loger.

13. Système pour le guidage de conduites (10) dans un véhicule (1) selon l'une quelconque des revendications précédentes,
**caractérisé en ce que**
l'élément de réception (20) présente deux mâchoires de serrage (26) entre lesquelles la conduite (11) à loger peut être logée avec possibilité de serrage.

14. Passage (4) pour la liaison de deux parties de véhicule (2, 3) reliées l'une à l'autre de façon mobile,
**caractérisée en ce que**
le passage (4) comprend un système pour le guidage de conduites (10) selon l'une quelconque des revendications 1 à 13.

15. Passage (4) pour la liaison de deux véhicules ou parties de véhicule (2, 3) relié(e)s l'un(e) à l'autre de façon mobile selon la revendication 14,
**caractérisée en ce que**
le système pour le guidage de conduites (10) est relié au niveau du passage, en particulier au niveau d'un cadre central (5) du passage (4), au moyen d'un dispositif de liaison (14).

16. Véhicule (1), en particulier véhicule avec des parties de véhicule (2, 3) reliées l'une à l'autre de façon mobile,
**caractérisé en ce que**
le véhicule (1) comprend un passage (4) selon la revendication 14 ou 15 ou un système pour le guidage de conduites (10) selon l'une quelconque des revendications 1 à 13.
